# FASCICULE DE BREVET EUROPEEN

(11) **EP 2 281 427 B1**
(45) Date de publication et mention de la délivrance du brevet: **08.03.2017**
(21) Numéro de dépôt: 10366004.9
(22) Date de dépôt: 12.07.2010
(51) Int. Cl.: C05F 11/08, C05G 3/00, A01C 21/00, C05D 1/00

(54) **Utilisation de cations pour la biofertilisation**
Verwendung von Kationen zur verbesserten biologischen Düngung von Kulturen
Use of cations for improving the bacterian biofertilisation of crops

(30) Priorité: 29.07.2009 FR 0903707
(43) Date de publication de la demande: 09.02.2011
(73) Titulaire: Agronutrition, 31390 Carbonne (FR)
(72) Inventeur: Claude, Pierre-Philippe, 54000 Nancy (FR)
(74) Mandataire: Lassiaille, Christian Michel

(56) Documents cités:
- WO-A2-2005/026079
- DE-A1- 3 626 874
- FR-A1- 2 880 344
- FR-A1- 2 910 230
- US-A- 5 005 345

## Description

### DOMAINE TECHNIQUE DE L'INVENTION

Le domaine technique de l'invention concerne la biofertilisation bactérienne, notamment azotobactérienne des grandes cultures agronomiques. Il est question d'utilisation inocula bactériens et de co-formulants à base de sels cationiques.

### ÉTAT DE LA TECHNIQUE

### DYNAMIQUE D'ADSORPTION / DÉS-AHDÉSION DES BACTÉRIES DANS LE SOL

Les BFCP (bactéries favorisant la croissance des plantes) colonisent, outre les racines de certaines cultures, les résidus de cultures (pailleux), les engrais organominéraux et/ou les biomasses racinaires résiduelles. Les mécanismes impliqués sont par exemple : (i) la production de sidérophores, (ii) l'antibiose contre des bactéries et des champignons pathogènes, (iii) la production de substances favorisant la croissance, et iv) la solubilisation des phosphates organiques et inorganiques. Les BFCP appartiennent à plusieurs genres, eg. *Agrobacterium, Alcaligenes, Arthrobacter, Azotobacter, Bacillus, Cellulomonas, Erwinia, Flavobacterium, Pseudomonas, (Brady)rhizobium* et *Xanthomonas.*

La dynamique adsorption / dés-adsorption des cellules azotobactérienne in situ est la résultantes de différents facteurs ;
1. chimiotaxie (Berleman et Bauer 2005a, 2005b)
2. interactions électrostatique (Rijnaarts *et al.* 1995 ; Dickson et Koohmaraie 1989)
3. exopolysaccharides bactériens (Chenu et Roberson 1996)
4. lipopolysaccharides bactériens (Williams et Fletcher 1996)
5. « force » ionique de la phase aqueuse du sol (Absolom *et al.* 1983)
6. CEC du sol, y compris des résidus de culture qui y sont enfouis

L'adhésion / dé-adhésion des cellules bactériennes aux surfaces solides du sol est aussi fonction du régime *hydromorphique*, régime influencé par la granulométrie, la texture, la porosité, l'aération et/ou la pédogénèse du sol. De plus, la répartition des bactéries dans les sols n'est pas uniforme dans l'espace (Grundmann *et al.* 2001), et c'est surtout leurs dispositions au sein des agrégats (Jordan et Maier 1999, Young et Ritz 2000), voire - plus précisément en dessous d'une certaine distance critique estimée à guère plus de 3 à 5 mm en proximité de la résidusphère (Gaillards *et al.* 2001) qui déterminent le plus leurs niveaux d'activité *in situ.*

### (i) Rôle du degré de saturation cationique de la CEC et du CAH

La CEC (capacité d'échange cationique) des résidus de culture pailleux - de l'ordre de 50 à 100 cmol+ / kg (Boissezon 1988 ; Boissezon *et al.* 1991) est supérieure à celle des sols dans lesquels ils sont enfouis - les CEC de ces sols étant généralement de l'ordre de 10 à 20 cmol+ / kg en régions tempérées. Cela implique que les *Azotobacteraceae,* même appliquées directement aux résidus de cultures pailleux, auront tendance à s'éloigner.

Du coup, même si ces résidus de culture pailleux sont plus réactifs - adsorbant, que les sols environnants, ils ne représentent généralement guère plus d'1% de la masse de sol ; soit un rapport CEC-sol / CEC-résidus d'environ 33. Or, une part non-négligeable de cette CEC, de l'ordre de 50 à 150% (voir infra) est déjà saturée (neutralisée). Il s'en suit que -malgré une prépondérance de la masse du sol par rapport à celle desdits résidus pailleux, la sommes des charges négatives pouvant repousser les bactéries - dont les surfaces sont dans l'ensemble chargées négativement, est probablement souvent très similaire entre les résidus de culture (résidusphère) et le sol environnant (pédosphère).

### (ii) Rôle de la granulométrie

Les sols à granulométrie plutôt fine, disons avec au moins 25% d'argile(s), vont favoriser la formation d'une macro-agrégation abondante ; les sols à granulométrie plus grossière, disons avec un minimum de 50% de sables(s), profiteront - paradoxalement, de la formation d'une micro-agrégation relativement plus abondante. En effet, selon les données de Kristianssen et al. 2006, la proportion d'agrégats d'au moins 4 mm et de l'ordre de 25% pour les sols avec plus de 25% d'argile, et d'à peine 10 à 15% pour les sols avec plus de 50% de sables. Cette micro-agrégation et/ou une certaine prédominance d'argile (granulométrie fine) ne peuvent qu'influencer - via leurs effets sur la porosité, la migration de bactéries et/ou des solutés carbonés. En effet, c'est cette formation - transitoire le cas échéant, d'un gradient hydrique en proximité des résidusphères qui affecte nécessairement la mobilité électro-osmotique - au sens de Suni et Romantschuk 2004), des bactéries.

Les sols plutôt argileux (minimum 25% d'argile) sont donc propice à la formation d'un minimum de macroagrégation (> 4 mm) ; les sol plutôt sableux eux affichent une granulométrie et une porosité grossières sans pour autant favoriser la macro-agrégation, mais au contraire favorisant la micro-agrégation. Du fait d'une remontée capillaire moins importante sont transitoirement saturés moins longtemps ; ils sont plus souvent sujet à une podzolisation. Ce sont les sols plutôt argileux qui - en présence d'un régime hydromorphe approprie, deviendront des gleysols du fait d'une saturation en eau prononcée et/ou prolongée.

### (iii) Rôle de la (macro)porosité et de la saturation en eau du sol

Dans un sol argileux, l'eau capillaire occupe jusqu'à 80% du volume des macro-agrégats de plus de 4 mm (Duchafour 2001). En conditions saturée les bactéries pourront migrer - si elles ne sont pas adsorbées à des surfaces, jusqu'à une certaine distance - soit de 300 à 400 um en sols sableux et jusqu'à 3 000 à 5 000 um en sol argileux. En conditions non-saturées cependant, ces bactéries en sol sableux sont confinées dans un volume compris à quelques um desdits résidus de culture pailleux ; en sols plutôt argileux elles évolueront dans des volumes de sol beaucoup plus conséquents compris dans des rayons de 200 et 3 000 um, donc à des distances où peut s'étendre l'influence de la résidusphère en voie de décomposition (Gaillard *et al.* 2001).

En conditions non-saturées en eau, c'est à travers l'eau capillaire que passera les solutés de carbone assimilables par les Azotobacteraceae issus de la dégradation des résidus de culture pailleux ; la rareté de l'eau capillaire en sols sableux ne peut donc que nuire à la valorisation ce des métabolites par lesdits *Azotobacteraceae.* En sols argileux, les bactéries peuvent donc - en principe, être alimentées en carbone issus de la dégradation de ces résidus de culture. Dans un sol sableux, seulement 25% de l'eau est capillaire et ne pourra donc occuper une part aussi substantielle de la macro-agrégation ; l'alimentation en carbone soluble des bactéries par capillarité sera nécessairement assuré qu'à faibles distances desdits résidus de culture pailleux.

En conditions de saturation en eau d'un sol sableux les BFCP initialement présentes à la surface de la résidusphère vont être repoussées. Au contraire, ce sont les gleysols plutôt argileux qui seront le plus souvent transitoirement saturés. Or, le précédant schéma théorique sera le plus applicable aux gleysols les plus structurés, et donc aussi aux macroporosités les plus importantes. En effet, Bachmann *et al.* 2008 notèrent que les cambisols, dont les horizons de surface sont relativement riches en carbone organique et dont les particules organo-minérales sont plutôt hydrophobes abritent un réseau hydrique discontinu. Cette discontinuité fait que l'alimentation de microorganismes à une certaine distance d'une source de substrats - tel que des résidus de culture pailleux en cour de décomposition par exemple, peut être problématique pour les microorganismes impliqués n'ayant donc eux non plus trop intérêts à s'éloigner.

Ce qu'il y a de paradoxale c'est que les gleysols relativement riches en argile et en matière organique, et du coup bien structurés et relativement « fertiles » pourraient très bien être eux aussi souvent peu ou pas réceptifs aux BFCP du fait qu'ils sont transitoirement saturés pendant l'inter-culture d'octobre à février. Cet impacte sur la composition et la dynamique des communautés bactériennes de la macroporosité des sols relativement riches en matière organique et en argile a déjà été rapporté par Grundmann *et al.* 2001 et Remenant *et al.* 2009. Selon ces auteurs, les sols les mieux structurés - en imposant des barrières à la migration des bactéries du sol, favorisent la formation d'ilots (micro-habitats) séparés l'un des autres.

### LA RÉPULSION ÉLECTROSTATIQUE DES BACTÉRIES DU SOL MANIPULÉE DES CATIONS ?

Étant, pour l'essentiel, chargées négativement en surface (cf. Korenevsky et Beverridge 2007) les bactéries, Gram négatives surtout, auront tendance à être *repoussées* par des surfaces chargées négativement, par exemple des particules de sol et/ou de résidus pailleux. Cette *tendance répulsive* peut être - en principe, partiellement atténuée si ces charges superficielles-généralement mesurées en erg / cm², sont neutralisées, par des cations mono- et/ou polyvalents (van Pelt *et al.* 1985, Fletcher 1988).

Notre connaissance des dynamiques d'absorption des bactéries aux substrats carbonés - y compris pailleux, provient de la ruminologie (cf. Miron et al. 2001). En effet, les interactions entre les bactéries et les di-cations Ca⁺⁺ et Mg⁺⁺ est le principal mécanisme d'adhésion de *Ruminococcus flavefaciens* à des substrats pailleux *in rumino.*

Il faut une augmentation d'un ordre de grandeur de ladite charge ionique pour doubler le taux d'adhésion des cellules. Par exemple, selon Rijnaarts *et al.* (1995), l'augmentation de la force ionique par deux ordres de grandeurs (100x) permet de réduire le potentiel zeta (la répulsion électrostatique des bactéries) d'une surface telle que le verre ou le teflon par un facteur de trois (3x). Selon Korenevsky et Beveridge (2007), une augmentation de la dite charge ionique par un ordre de grandeur (10x) entraîne une diminution de la répulsion électrostatique des bactéries de moitié (50%). Selon van Schie et Fletcher 1999, le traitement au fer (FeCl₃) de lamelles de verre a priori dotées de charges nettes négatives favorise l'adsorption de cellules bactériennes et permet ainsi de fixer de 30 à 40 cellules bactériennes par µm², soit de trois à quatre fois plus que sur les lamelles non - traitées.

Si nous pouvions substituer aux charges négatives en surface des cellules *Azotobacteraceae -* ou d'autre BFCP, et/ou de résidus de culture pailleux, des charges positives, nous pourrions de la sorte favoriser l'adsorption de ces cellules bactériennes, ou du moins en favoriser la migration vers ces substrats carbonés (eg. Stenström 1989). Or, à ce jour cette approche n'est pas directement valorisable en agronomie, et cela contrairement aux secteurs de la biorestauration des sols (Jang *et al.* 1983 ; Gannon *et al.* 1991), voire de la médecine dentaire (Busscher *et al.* 1984). Plus généralement, diverses approches ont été proposées pour favoriser le rapprochement de bactéries utiles vers leur substrats carbonés, à savoir ;
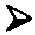 ajuster le pH pour atteindre le point de charge nulle des particules colloïdales
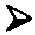 augmenter la salinité pour comprimer la couche diffuse
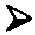 **neutraliser la charge de surface par des cations polyvalents**
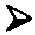 piéger les colloïdes dans des précipités
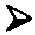 adsorber les colloïdes sur des polymères chargés à longue chaîne.

Vu les quantités de sols arables par ha (plus de 1 000 tonnes), les deux premières possibilités ne sont pas applicables en agronomie du fait de l'impact négative de l'acidification sur la disponibilité de certaines éléments. Les deux dernières possibilités sont elles surtout opérables pour la décontamination des eaux. Reste l'utilisation de sels cationiques polyvalents, tels que le chlorure ferrique FeCl₃, 6 H₂O, le sulfate ferreux FeSO₄, 7 H₂O, et - surtout, de calcium et de magnésium.

### QUELQUES BREVETS PERTINENTS ?

WO 2005/026079 A2 décrit des compositions de *polycations (sic)* solubles à pH élevés par chélation. Cette invention concerne plus particulièrement l'apport de fer (Fe) aux racines, y compris via le sol. En situations agronomiques, maraîchère et/ou horticole, les apports de tels cations polyvalents est de l'ordre d'au moins quelques centaines de mole par hectare. Il s'agit de cibler expressément les « organes absorptives » de la culture en cour - y compris les racines via le sol ; il ne convient par d'appliquer ce type de compositions comportant des agents chélateurs directement aux résidus de culture au sol bien avant le semis de la culture en cour. De plus, ce document préconise l'utilisation de solutions avec chélateurs en sols calcaires et donc dont la CEC est nécessairement très (sur)saturés en calcium (*i.e*. de 200 à 300%), et cela donc contrairement aux caractéristiques de la présente invention pour le traitement par pulvérisation liquide des résidus de culture pailleux au sol. En ce sens, l'homme de métiers ne pourra pas préconiser de telles compositions, compositions somme toutes élégantes, coûteuse et difficilement mises en oeuvre pour le traitement de vulgaires « déchets » de culture que sont en principe les résidus de culture pailleux laissés au sol.

DE 36 26 874 A1 concerne dans un premier temps l'obtention d'un *engrais liquide* dont le ratio cations/anions est spécifiquement et expressément adapté à la nature et l'état du sol, et donc accessoirement au susdit degré de saturation de la CEC de ce sol. Plus particulièrement, ce document mentionne un engrais liquide dont le ratio cations/anions est préalablement ajusté électro-chimiquement de façon à tenir compte de l'état cationique (sols acides) ou anionique (sol basiques). En ce sens, la fertilisation de sols arables avec de telles solutions de sels permet d'atténuer l'inutile acidification de sols acides ou alcalinisation de sols basiques ; cette fertilisation est donc en ce sens dite « thérapeutique ». Cela dit, cet invention cherche expressément à faire *coïncider* l'analyse de terre et la composition anion- / cationique dudit engrais liquide ; l'analyse (test) étant expressément effectué pour/sur le sol, c'est celui-ci qui est ciblé et non les résidus de culture pailleux qui ce trouvent à sa surface.

Au mieux, l'état de la technique préconise aujourd'hui - eg. US 5 005 345 A, le traitement de tels résidus pailleux au sol avec des solutions implicitement et nécessairement azotées. En effet, à la lumière de la description dans D4, la première revendication implique nécessairement la présence de N dans la solution nutritive, ce qui n'est pas le cas pour la présente invention.

### DIVULGATION DE L'INVENTION

### Problème technique

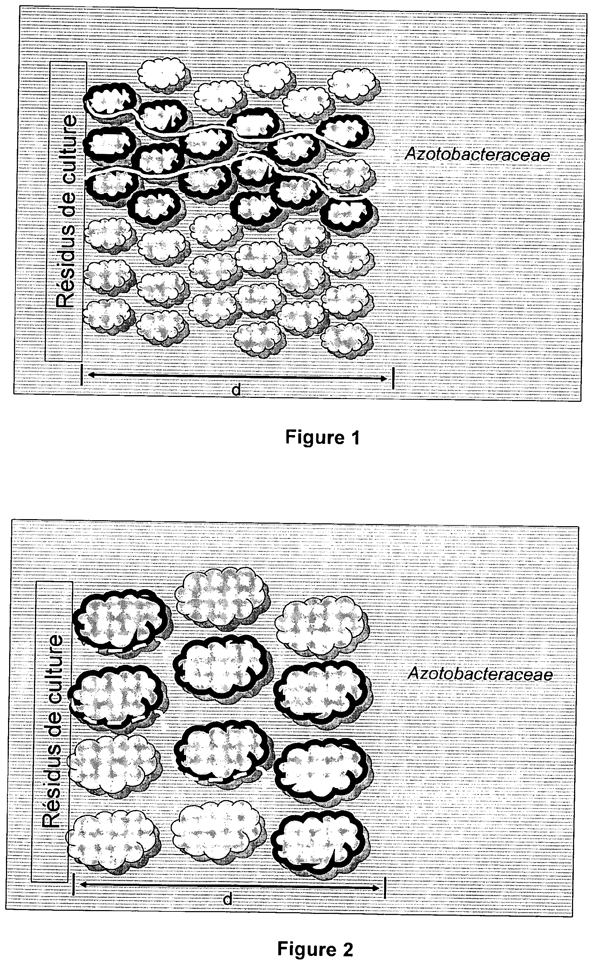

La macrostructure bien développée de certains sols arables (eg. gleysols argileux) et/ou leur granulométrie grossière (eg. podzols sableux), fait que leurs macroporosités importantes pourraient - en conditions non-saturées en eau, abolir le réseau d'eau capillaire alimentant en substrats carbonés solubles des bactéries ayant migrées loin de cette source de carbone (*cf.* Figures 1 et 2) ; les Azotobacteraceae ayant émigrées trop loin de ladite source de carbone (dites « distales ») sont à terme effectivement « perchées ». En effet, dans le cas d'une macroporosité / macrostructure « généreuse » et caractéristique de sols fertiles, la non-saturation en eau du sol en elle-même aussi favorable à la croissance des plantes, interrompra la diffusion des solutés carbonés issus de la dégradation des résidus de culture au sol (résidusphères) vers ces *Azotobacteraceae.*

En ce sens, la répartition des bactéries dans les sols n'est pas uniforme, et c'est surtout leurs dispositions au sein des agrégats, voire - plus précisément en dessous d'une certaine distance critique généralement estimée à guère plus de 2 à 5 mm en proximité de la résidusphère qui déterminent le plus leurs niveaux d'activité et de prolifération *in situ.* A noter que ces dimensions de l'ordre de 2 à 5 mm coïncident approximativement avec la taille maximale des agrégats de terre - sa macrostructure, les plus bénéfiques pour la plante. Le problème technique découle donc en partie du fait qu'une macroporosité avantageuse pour la plante - i.e. l'alimentation en nutriments solubles des racines, n'est pas nécessairement la plus avantageuse pour l'alimentation continue en solutés carbonés des BFCP résidusphériques.

D'autre part, la CEC des résidus de culture pailleux enfouis au sol étant appréciablement plus grande que celle des particules de terre environnantes, des bactéries réintroduite à la surface de ces résidus de culture (résidusphères) auront tendance à être repoussées vers lesdites particules de terre et d'adhérer préférentiellement à celles-ci. Sans mécanismes actifs (molécules signalétiques et/ou des récepteurs) pour contrer cette répulsion en favorisant une interaction spécifique des bactéries - et cela contrairement aux racines (rhizosphères), les résidusphères subiront cette émigration des BFCP réintroduites à leurs surfaces. Cette émigration est contreproductive et mine l'efficacité de telles biofertilisations.

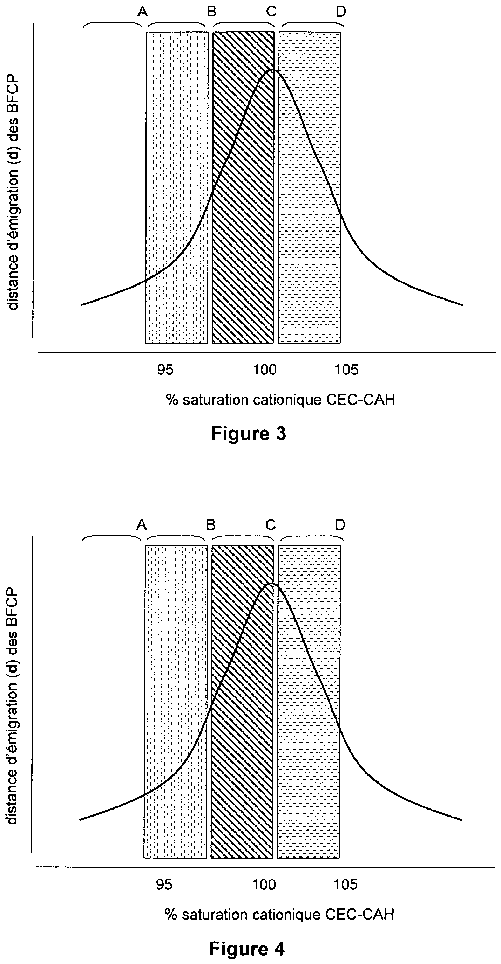

Or, la CEC du sol - bien plus massive dans l'ensemble que celle des résidus des résidusphères, réussie néanmoins à contrebalancer cette répulsion des bactéries, les amenant à résider malgré tout en proximité des résidusphères ; mais cela à certaines conditions cependant. Il faut notamment que le degré de saturation de la CEC du so ne soit pas aux alentours de 100% ; une sous-saturation marquée (voir les zones A et B aux Figures 3 et 4) permettant aux charges négatives (i.e. CEC non-saturée) de repousser effectivement vers la résidusphère les BFCP, une sursaturation marquée (i.e. voir la zone D aux Figures 3 et 4) permettant de mettre en solution (du sol) des cations capables par après de neutraliser *de facto* la CEC des résidusphères. Cela dit, les sols arables ni sur-, ni sous-saturés sont généralement les plus avantageux pour la croissance de la plante.

Pour résumer : Une macroporosité bien structurée, des sols non saturés en eau, et une CEC ni sur-, ni sous saturée - conditions pourtant favorables à la croissance des plantes, sont en principe contraires au bon fonctionnement des BFCP réintroduites en proximité des résidusphères, et cela en raison de la répulsion électrostatique et l'émigration de celles-ci au-delà de la zone d'influence en proximité des résidusphères. Cette émigration des BFCP au dépends de la résidusphère peut être plutôt à l'horizontal par diffusion des cellules bactériennes à une certaine distance - généralement au-delà de quelques 1 à 4 mm, soit à la verticale par lessivage desdites cellules bactériennes au dessous des résidusphères une fois les résidus de culture au sol enfouis. Bien que ces types de mouvements peuvent avoir lieu - à différentes échelles, dans la plupart des sols à un moment ou l'autre ; les mouvements à l'horizontale seront surtout à remarquer dans des sols hydromorphes tel que des gleysols, tandis que les mouvements à la verticale seront surtout appréciables en sols plus lessivés tel que des podzols. Le problème technique ce pose donc tant pour les sols hydromorphes (eg. gleysols) bien structurés que pour les sols podzolisés moins structurés plus sableux et/ou à granulométries plus grossières (eg. podzols).

Il faut donc trouver comment favoriser un équilibre entre l'adsorption des BFCP aux CAH et aux résidus de culture, et cela à l'avantage desdits résidus de culture. Il semble donc que le problème et le défi technique consiste à trouver une façon simple de neutraliser préférentiellement les charges négatives à la surface des résidus de culture au sol plutôt qu'à la surface des complexes argilo-humiques vers lesquels les bactéries biofertilisantes réintroduites tendront à migrer.

### Solution technique

Il est permit de postuler une répartition bimodale des distances moyennes séparant les cellules (azoto)bactériennes de la surface des résidusphères en fonction du degré de saturation du CEC du sol. En effet, et schématiquement, cette disposition des cellules (azoto)bactériennes par rapport aux résidusphères, et plus particulièrement en fonction du degré de neutralisation des charges négative de celle-ci et du CEC du sol environnant est présentée à la Figures 3 et 4 ;
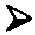 (A) Un sol relativement pauvre en Ca échangeable, et dont le CEC est non-saturé affichera bon nombre de charges négative capables de repousser les BFCP vers les résidus de culture pailleux enfouis (résidusphère) dont les charges négatives sont pour l'essentiel non-neutralisées.
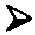 (B) A mesure que la saturation cationique du CEC du sol augmente, de moins en moins de charges négatives seront effectivement capables d'assurer cette répulsion des BFCP vers les résidus de culture au sol enfouis et négativement chargés, d'où une certaine « hésitation » des BFCP à une distance (d) intermédiaire entre pédo- et résidusphère.
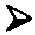 (C) Au-delà d'un certain seuil proche mais inférieur à 100% de saturation du CAH, la somme des charges négatives non-neutralisées de la pédosphère sera plus faible que celle de la résidusphère ; les BFCP auront aussi une (forte) tendance à émigrer de la résidusphère vers la pédosphère, et cela au détriment de la valorisation (dégradation) microbiologique de celle-ci.
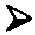 (D) Une fois la CEC sursaturée, les cations pourront entrer en solution du sol et diffuser vers la résidusphère et neutraliser eux même les charges négatives de celle-ci ; la susdite émigration des BFCP au dépends de la résidusphère sera ainsi atténuée, voire éventuellement stoppée si suffisamment de cations sont ainsi mise en solution.

A noter dans ce schéma une zone hachurée représentant une marge de pourcentage de saturation du CEC à l'intérieur de laquelle la somme des charges négatives est inférieure à celle de la résidusphère ; l'émigration des BFCP de cette résidusphère est ici inéluctable. Or, c'est à l'intérieure de cette marge relativement étroite aux abords d'une pleine saturation de la CEC que la neutralisation partielle de la CEC résidusphérique peut contribuer au rapprochement des BFCP-AZB et contribuer à la valorisation microbiologique de ces résidus de culture pailleux enfouis.

Or, le schéma présenté à la Figure 3 est idéal est présuppose une diffusion parfaite des cations de la pédosphère vers la résidusphère, et vice et versa. Dans les faits, la solution du sol n'occupe qu'une portion de la pédosphère et la susdite diffusion sera vraisemblablement bien moins que parfaite. Il existe probablement donc une certaine inertie de part et d'autre des seuils - i.e. 95, 100 et 105% de saturation cationique du CEC, de sorte que cette segmentation de la susdite bi-modalité peut être récrite plus largement (Figure 4). A noter que la susdite marge étroite (hachurée) aux abords d'une pleine saturation du CEC est maintenant un peu moins étroite. Selon mes estimations, l'étendue de la marge de % de saturation cationique du CEC-CAH à considérer ici est plutôt de 67 à 133% (Figure 4), le susdit seuil de saturation en principe proche mais inférieur à 100% étant vraisemblablement plutôt de le l'ordre de 110 à 115%, soit au environs de 112% (Figure 4). Cela dit, la marge entre 88 et 112 % de saturation est effectivement assez étroite, bien que la mesure de ce degré de saturation cationique soit assez précise et routinière. De plus, il s'avère que - en France et en Europe de l'Ouest du moins, la majorité des cambisol - sol dominant dans nos régions, affichent souvent des degrés de saturation cationique du CEC-CAH de l'ordre et aux alentours de 80 à 120%.

Il s'agit de rediriger vers les résidus de culture pailleux au sol des préparations des cations permettant ainsi de moduler la répulsion électrostatique des bactéries. Une fois dans la zone hydratée, la présence de ces sels cationiques favorisera une réduction de l'énergie libre de surface (ΔF_{adh}) et donc la fixation desdites BFCP aux résidus de culture pailleux au sol. En effet, il est raisonnable de s'attendre à ce qu'un plus grand nombre de cellules bactériennes adhérent à des solides chargés négativement en fonction d'une certaine réduction de la répulsion électrostatique des bactéries et/ou de la somme de leurs charges négatives superficielles ; les données de van Loosdrecth *et al.*(1987a, 1987b) et Gannon *et al.* 1991 nous l'indiquent.

J'ai constaté que, (1) la CEC des résidus de culture pailleux enfouis en surface des sols (i.e. la résidusphère) est nettement supérieure à celle du sol dans son ensemble (i.e. la pédosphère) - vraisemblablement par un facteur d'environ 300%, et d'autre (2) du fait d'une saturation partielle mais importante - de l'ordre d'au moins 67%, la somme des charges négatives de la CEC du sol non-neutralisées est du même ordre de grandeur que la somme de celles attribuables à la résidusphère. Cette dynamique de rééquilibrage entre les CEC des résidu- et pédosphères ce traduit - en théorie, par une répartition bimodal des distance d'émigration - d, des bactéries du sol - notamment celles réintroduites par inoculation, par rapport à la résidusphère.

L'invention consiste donc en une application par pulvérisation liquide de solutions nutritives contenant des cations divalents mais dépourvues d'oses, d'osides et des sels de macroéléments N et P, mais pouvant contenir des sels de K et/ou de Na, directement aux résidus de culture pailleux de cultures céréalières ou de maïs et incorporés par la suite en surface de sols arables en pré-semis de grandes cultures d'hivers ou de cultures intermédiaires pièges à nitrates (Cipan) non-*Fabaceae..* Elle est caractérisée en ce que les cations sont apportés en équivalents par hectare de résidus de culture pailleux au sol compris entre 5 et 50 moles, plus particulièrement entre 10 et 30 moles, et avantageusement d'environ 12 à 15 moles. De plus, les résidus de culture au sol sont avantageusement azotobactérisés à l'aide d'une dose-hectare d'inocula de cellules *Azotobacteraceae* comprenant entre 0,1 et 100 x 10¹², plus particulièrement entre 1 et 10 x 10¹², et avantageusement aux alentours de 5 x 10¹² cellules viables. Le sol ainsi ciblé est un cambisol ou assimilable à un cambisol, le degré de saturation cationique de la CEC du sol, y compris la portion de celle-ci attribuable au complexe argilo-humique (CAH), étant important, soit compris entre des valeurs de 67 à 133%, plus particulièrement entre es valeurs de 75 et 125%, et avantageusement entre des valeurs de 88 et 112%. De plus, les résidus de culture pailleux laissés au sol par des cultures céréalière ou de maïs-grain sont préalablement et avantageusement enduits d'un minimum de d'oses ou d'osides capable de déclencher l'activité métabolique des *Azotobacteraceae* présentes et/ou des bactéries du sol environnantes. Il s'agit donc accessoirement de cations pour la pulvérisation liquide de résidus de culture pailleux au sol à enfouir - en partie ou totalement, en pré-semis desdites grandes cultures d'hiver à utiliser lors de la biofertilisation au champ (*in situ*) de grandes cultures d'hiver et de culture intermédiaires pièges à nitrate (Cipan) non-Fabaceae

### Avantages apportés et activité inventive

L'invention concerne la biofertilisation des cultures par application de cations directement aux résidus de culture pailleux au sol, et cela en pré-semis desdites (grandes) cultures. Il ne s'agit donc surtout pas d'appliquer de tels (poly)cations à un quelconque organe (*absorptive* ; WO 2005/026079 A2), au sol (DE 36 26 874 A1), voire de l'utilisation d'une composition implicitement et nécessairement azotée (US 5 005 345 A). L'invention peut aussi être efficace et utile sans l'azotobactérisation par inoculation desdits résidus de culture pailleux au sol ; elle est donc en rupture par rapport à l'état de la technique y compris FR 2 910 230 A1 et FR 2 880 344.

L'activité inventive de la présente invention, réside dans la suppression soit l'azote (*cf.* US 5 005 345 A), soit les oses (cf. FR 09/00428), de préparations destinées au traitement des résidus de culture pailleux au sol. Ces suppressions - notamment celle de l'azote, sont contre-intuitives est contraire aux habitudes de l'homme de métier qui cherchera à complémenter et/ou amorcer le métabolisme C-N des *résidusphères* entourant les résidus de cultures pailleux. Or, les solutions de cations calciques étant beaucoup plus stables et robustes que celles de solutions azotées - surtout si elles sont enrichies de sucres (cf. US 5 005 345 A), de telles compositions sont en ce sens nettement plus avantageuses.

De plus, et bien qu'il est loisible d'appliquer des solutions (poly)cationiques avec chélateurs à des résidus pailleux au sol, l'homme de métiers n'a jamais été amené à le faire. En effet, pour l'homme (la personne) de métier, l'application de calcium au sol - y compris donc aux résidus de culture pailleux qu'il contient, nécessite l'apport de doses-hectare pondéralement très importantes, soit de l'ordre d'une ou quelques tonnes (1 000 kg) ; l'application de doses-hectare de l'ordre du kg (i.e. de 5 à 50 moles ; voire revendication 3 de la présente invention) de cations tels que le Ca étant nécessairement réservée aux traitements desdites « organes absorptives » de la culture en cour, et donc surtout pas des résidus de culture pailleux de la culture précédente laissés au sol ; il ne convient donc pas de considérer ces derniers comme des organes absorptives. Enfin, l'invention est avantageusement réalisée dans un sol dont le degré de saturation de la CEC (capacité d'échange cationique) avoisine les 100% ; cette caractéristique de l'invention est elle aussi non évidente pour l'homme de métier, le sol que moyennement saturé aux alentours de 100% ne faisant pas généralement l'objet d'apports de calcium.

### BRÈVE DESCRIPTION DES DESSINS ET FIGURES

**Figure 1** **:** La plus petite macroporosité de sols peu structurés et/ou à granulométries plutôt fines établira un réseau d'eau capillaire plus continu permettant ainsi d'alimenter en métabolites carbonés solubles issus de la dégradation des résidus de culture pailleux les *Azotobacteraceae* ayant migrées à une certaine distance (d) pendant la période de saturation transitoire en eau caractéristique de tels sols. A noter que les solutés de carbone (flèches blanches) peuvent néanmoins migrer jusqu'à ces *Azotobacteraceae.*
**Figure 2** **:** La macroporosité plus importante de sols les plus structurés, ou encore à granulométries plutôt grossières, ne permettant pas l'établissement d'un véritable réseau d'eau capillaire aussi continu fera barrière à l'alimentation en métabolites carbonés solubles des *Azotobacteraceae* ayant ainsi migrées à une certaine distance des résidus de culture pailleux pendant la période de saturation transitoire en eau. A noter qu'ici les solutés de carbone ne peuvent pas migrer à une distance (d) de façon à alimenter en carbone les *Azotobacteraceae* « perchées » à cet endroit relativement éloigné des résidus de culture source de substrat carboné.
**Figure 3** **:** Représentation schématique de la disposition de cellules (azoto)bactériennes par rapport aux résidusphères à une certaine distance - *d*, de ceux celles-ci et en fonction du degré de neutralisation du CEC-CAH du sol environnant ; voir le texte pour explications.
**Figure 4** **:** Modification de la représentation schématique en Figure C afin de mieux tenir compte de l'immersion de CAH et argiles - et donc de leurs CEC, dans la solution du sol. Selon mes estimations, l'étendue de la marge de % de saturation cationique du CEC-CAH à considérer ici est plutôt de 67 à 133%, le susdit seuil de saturation en principe proche mais inférieur à 100% étant vraisemblablement plutôt de le l'ordre de 110 à 115%, soit au environs de 112%.

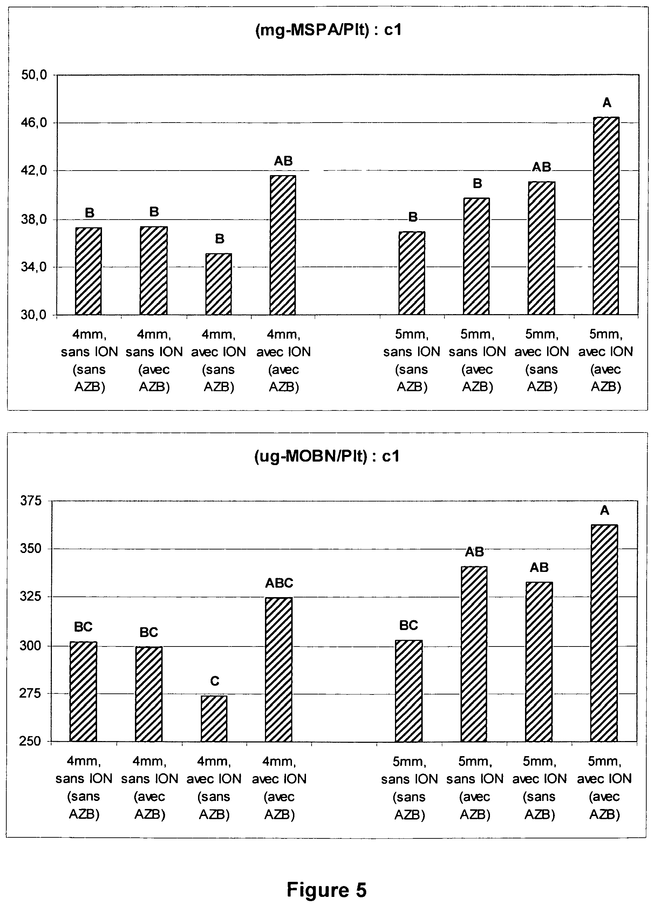

**Figure 5** **:** Matières sèches des parties aériennes (mg-MSPA) et leurs mobilisation de l'azote (ug-MOBN) par plantule (Plt) de *Lolium multiflorum* au moment de la première coupe (c1) 56 jours post-semis (jps) selon le type de modalités avec et sans ION, avec et sans AZB pour deux types de sols reconstitués (SOL) - dits « 4 mm » et « 5 mm » selon le cas. Les moyennes pour chacune des modalités sont comparables via la méthode dite de Duncan (α = 5%) ; les moyennes associées aux mêmes lettrages sont définitivement non - significativement différentes.

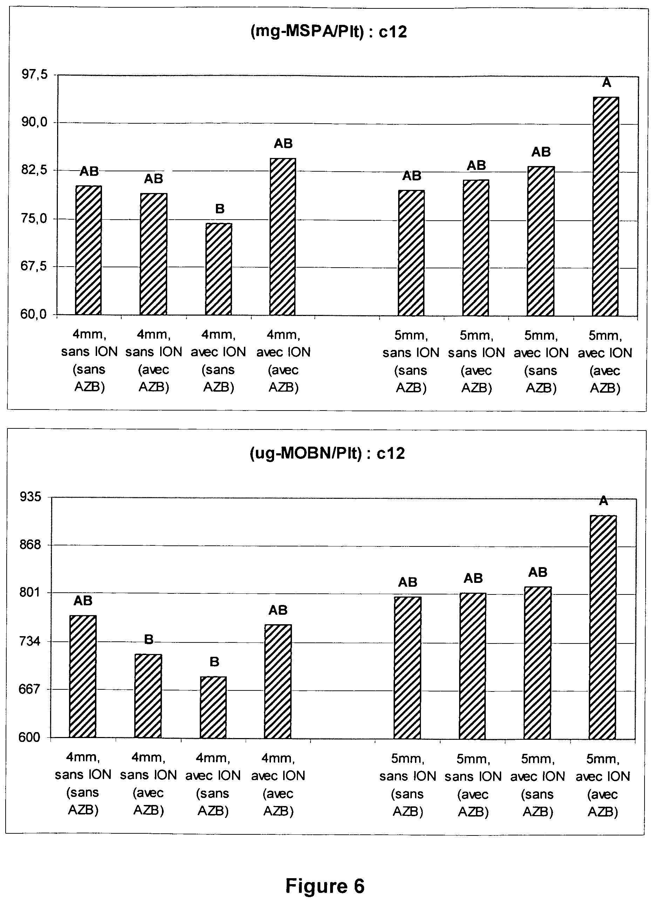

**Figure 6** **:** Matières sèches des parties aériennes (mg-MSPA) et leurs mobilisation de l'azote (ug-MOBN) par plantule (Plt) de *Lolium multiflorum* après la deuxième coupe (c12) 84 jours post-semis (jps) selon le type de modalités avec et sans ION, avec et sans AZB pour deux types de sols reconstitués (SOL) - dits « 4 mm » et « 5 mm » selon le cas. Les moyennes pour chacune des modalités sont comparables via la méthode dite de Duncan (α = 5%) ; les moyennes associées aux mêmes lettrages sont définitivement non - significativement différentes.

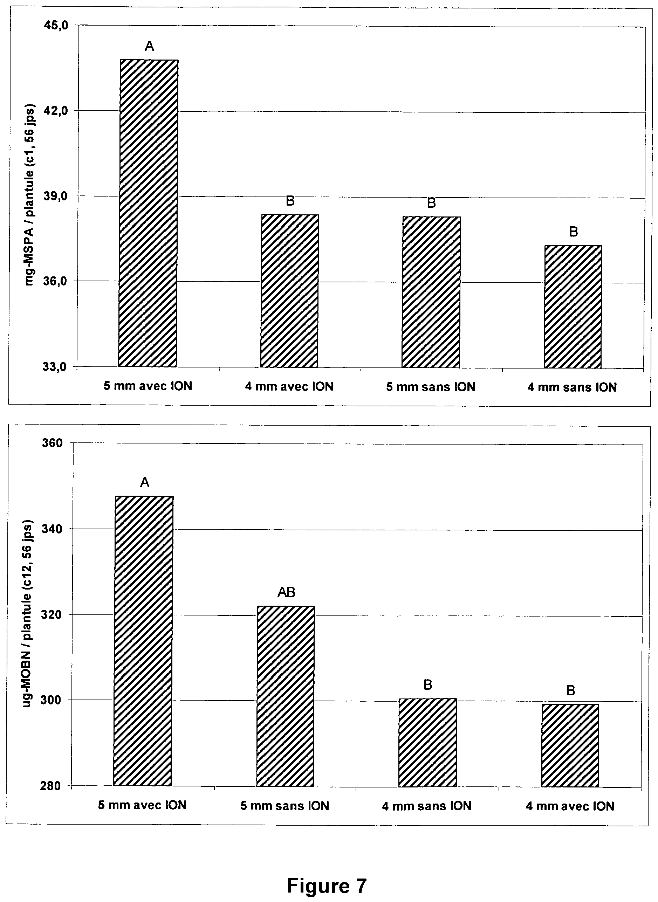

**Figure 7** **:** Matières sèches des parties aériennes (mg-MSPA) et leurs mobilisation de l'azote (ug-MOBN) par plantule de *Lolium multiflorum* au moment de la première coupe (c1) 56 jours post-semis (jps) avec et sans ION pour les deux types de sols reconstitués (SOL) - dits « 4 mm » et « 5 mm », et cela indépendamment de l'azotobacterisation (AZB) des résidusphères. Les moyennes pour chacune des modalités sont comparables via la méthode dite de Duncan (α = 5%) ; les moyennes associées aux mêmes lettrages sont définitivement non - significativement différentes.

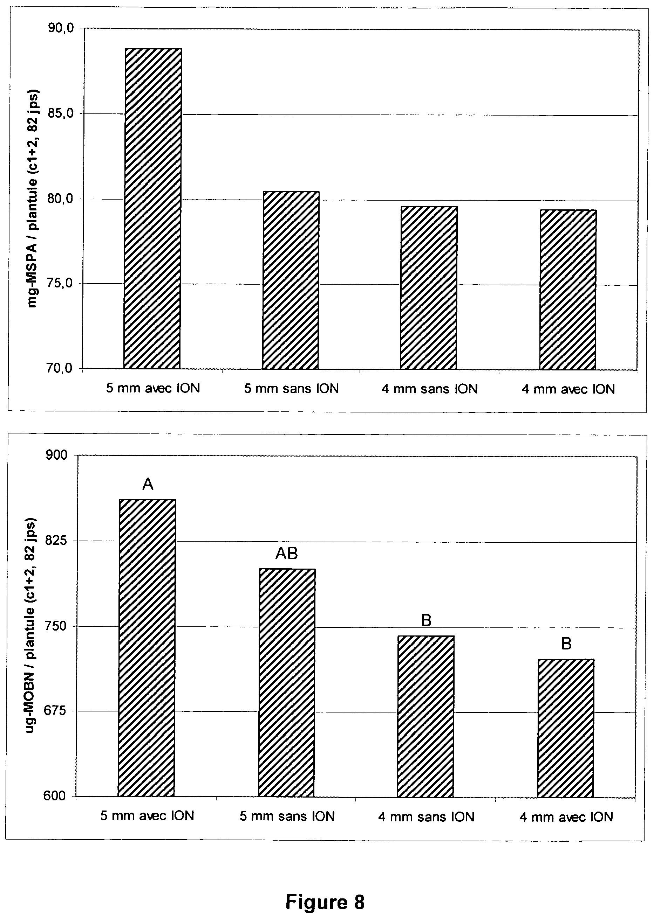

**Figure 8** **:** Matières sèches des parties aériennes (mg-MSPA) et leurs mobilisation de l'azote (ug-MOBN) par plantule de *Lolium multiflorum* après la deuxième coupe (c12) 84 jours post-semis (jps) avec et sans ION pour les deux types de sols reconstitués (SOL) - dits « 4 mm » et « 5 mm », et cela indépendamment de l'azotobacterisation (AZB) des résidusphères. Les moyennes pour chacune des modalités sont comparables via la méthode dite de Duncan (α = 5%) ; les moyennes associées aux mêmes lettrages sont définitivement non - significativement différentes ; l'absence de lettrage implique que l'Anova n'a pas révélé d'effet modalité sur ce paramètre.

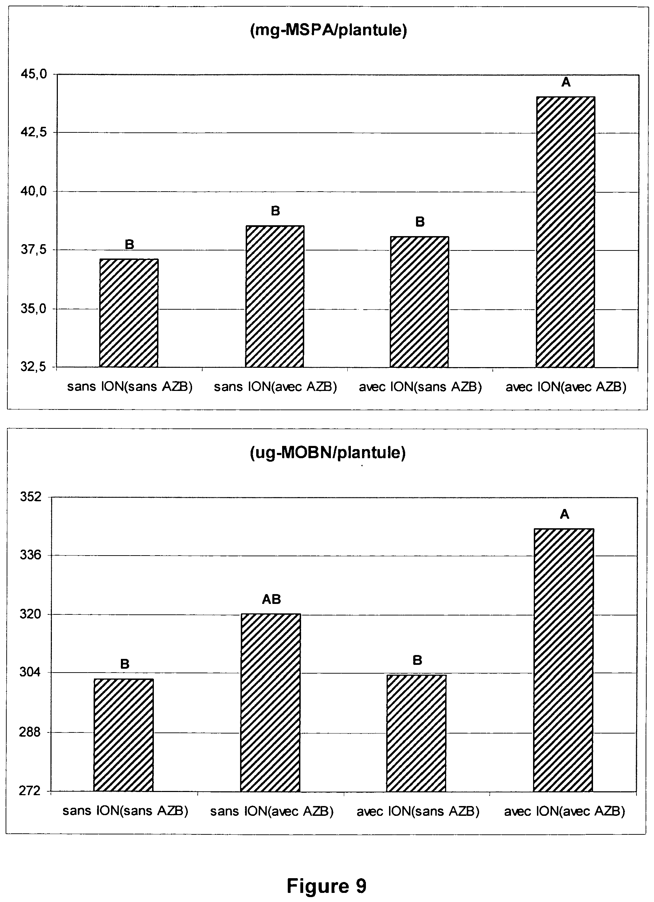

**Figure 9** **:** Matières sèches des parties aériennes (mg-MSPA) et leurs mobilisation de l'azote (ug-MOBN) par plantule de *Lolium multiflorum* au moment de la première coupe (c1) 56 jours post-semis (jps) avec et sans ION et/ou azotobactérisation des résidusphères (AZB), et cela indépendamment des deux types de sols reconstitués (SOL) - dits « 4 mm » et « 5 mm ». Les moyennes pour chacune des modalités sont comparables via la méthode dite de Duncan (α = 5%) ; les moyennes associées aux mêmes lettrages sont définitivement non - significativement différentes.

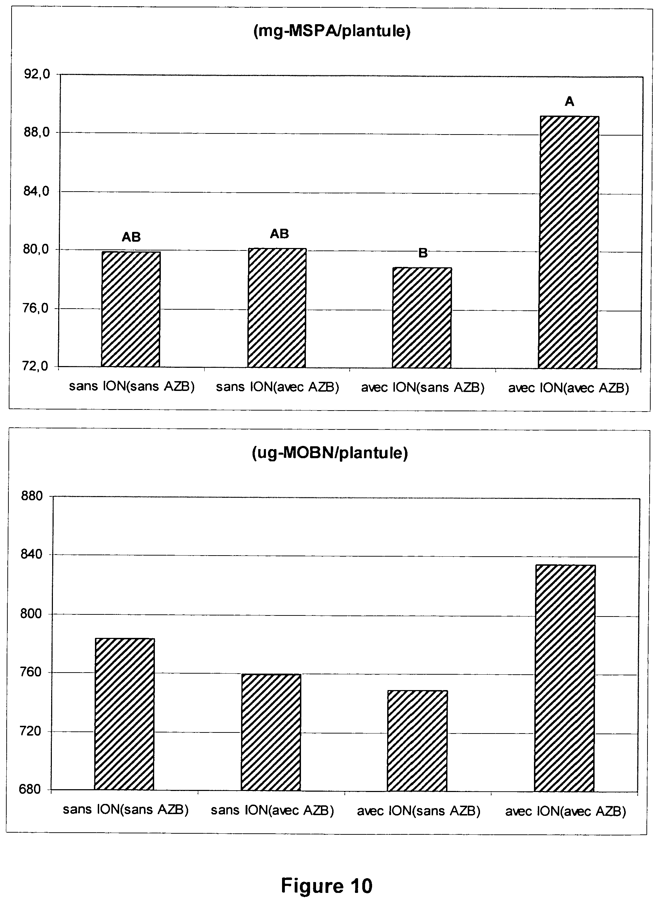

**Figure 10** **;** Matières sèches des parties aériennes (mg-MSPA) et leurs mobilisation de l'azote (ug-MOBN) par plantule de *Lolium multiflorum* après la deuxième coupe (c12) 84 jours post-semis (jps) avec et sans ION et/ou azotobactérisation des résidusphères (AZB), et cela indépendamment des deux types de sols reconstitués (SOL) - dits « 4 mm » et « 5 mm ». Les moyennes pour chacune des modalités sont comparables via la méthode dite de Duncan (α = 5%) ; les moyennes associées aux mêmes lettrages sont définitivement non - significativement différentes.

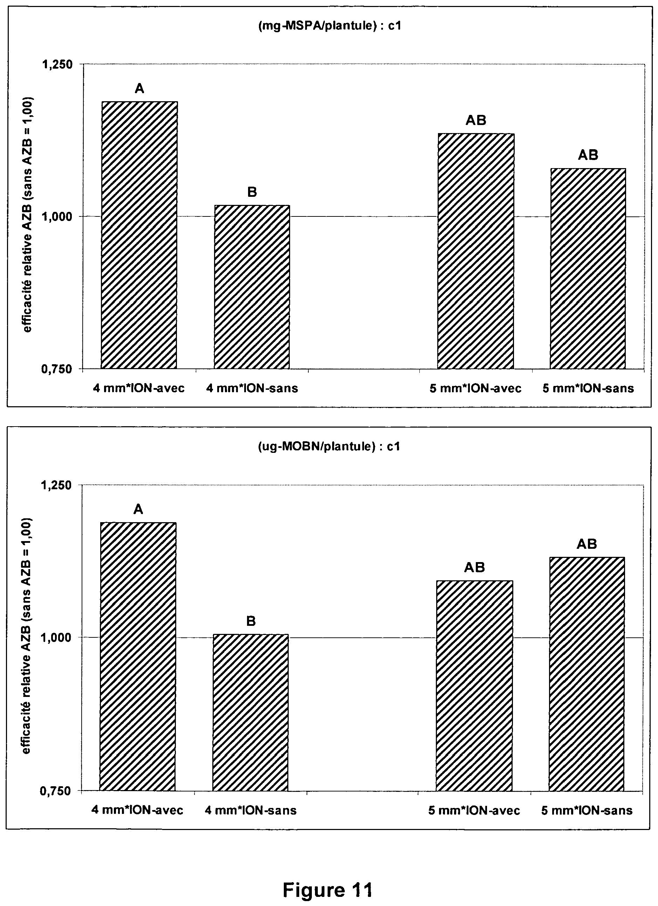

**Figure 11** **:** Efficacité relative - par rapport à un témoin non-azotobactérisé, de l'azotobactérisation des résidusphères (erAZB) avec et sans ION sur les deux types de sol reconstitués (SOL) - dits « 4 mm » et « 5 mm » au moment de la première coupe (c1) 56 jours post-semis (jps). L'erAZB et calculée à partir des MSPA et des MOBN par plantule ; à noter un effet plus marqué - plus net, d'ION sur SOL 4 mm.

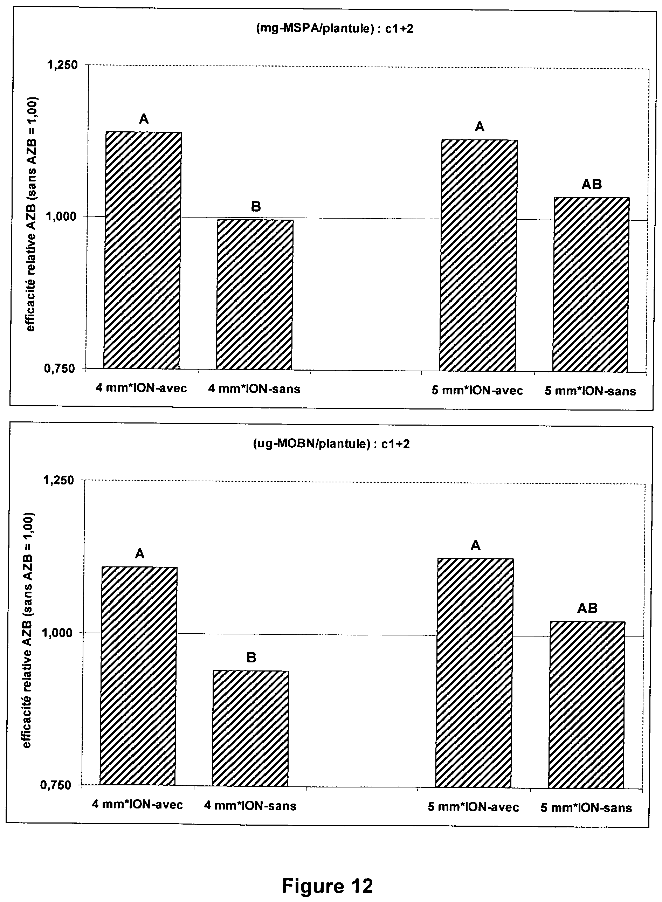

**Figure 12** **:** Efficacité relative - par rapport à un témoin non-azotobactérisé, de l'azotobactérisation des résidusphères (erAZB) avec et sans ION sur les deux types de sol reconstitués (SOL) - dits « 4 mm » et « 5 mm » àpres la deuxième coupe (c1+2) 84 jours post-semis (jps). L'erAZB et calculée à partir des MSPA et des MOBN par plantule ; à noter un effet plus marqué - plus net, d'ION sur SOL 4 mm.

### MODE DE RÉALISATION PRÉFÉRÉ DE L'INVENTION

L'invention est avantageusement réalisée en sols dont la granulométrie et/ou la macroporosité provoquera une discontinuité du (des) réseau(x) d'eau capillaire. Ces sols peuvent être des sols sableux à granulométries grossières, ou encore des gleysols dont le degré d'agrégation et de macroporosité - bien qu'avantageux pour l'alimentation en nutriments solubles des racines, n'est pas pour autant toujours favorable au maintient du susdit réseau capillaire.

Les taux de saturation des CEC de ces sols sont que moyens, soit avantageusement compris entre 67 et 133 %. Pour la France (données BDAT et Indiquasol ; http://www.gissol.fr), les cambisols sont prédominants dans plus du 3/4 des cantons français ; la prédominance d'une saturation moyenne de la CEC-CAH des sols est par contre plus limitée, soit de l'ordre de 30% pour une tranche de taux de saturation (hors Na) de 67 à 133%, de 20% pour une tranche de 75 à 125% et de 12% pour une tranche de 90 à 110% de saturation. Donc, les cambisols - et/ou assimilables (eg. certains luvisols, gleysols et/ou podzols) seront généralement présents sur la parcelle *in situ,* mais leurs taux de saturation seront eux avantageusement déterminé afin d'éviter l'application de l'invention sur des sols en ce sen soit sur-, soit sous-saturés.

Des dose-hectare d'environ 1 kg (1 000 g) de CaO ou de MgO peuvent être appliquées par pulvérisations liquides ou solides à la surface de résidus de culture au sol en pré-semis de cultures d'hiver, soit de 18 à 25 moles de calcium et/ou de magnésium, respectivement, par hectare. Il est avantageux d'apporter par pulvérisation liquide lors de la bactérisation des résidus de culture au sens de Claude et Fillion 2004 des doses-hectare équivalentes à 1 kg CaO (5 L x 200 g/L), soit une solution à ∼ 14-15% CaO, et/ou 1,1 kg CaO (6 L x 186 g/L) soit une solution à ∼ 14% CaO. Pour ce faire, il existe des formulations commerciales, par exemples celles proposées par la société Agronutrition SAS (France ; eg. FixaCa®).

Les résidus de culture pailleux, voire de phytomasses de cultures intermédiaires piège à nitrates (Cipan) non*-Fabaceae,* sont avantageusement bactérisés à hauteur de 5 x 10⁵ par g de résidus de culture, ou selon les quantités de matières résiduelles présentes au sol. Pour des apports de 10 000 kg par hectare de résidus de culture pailleux au sol, cette bactérisation équivaut à des dose-hectare d'inocula d'environ 5 x 10¹² cellules azotobactériennes, soit les dose-hectare préconisées par Claude et Fillion (2004) et Claude et Giroux (2006). Les résidus de culture-pailleux ou biomasses Cipan, sont traités par pulvérisation liquide à la façon de Claude et Fillon (2004) ; BFCP adaptées à la vie dans les sols (cf. FR 01/15542), autochtones et donc avantageuses en agronomie sont que partiellement hydrophobes et électrocinétique n'exclut pas *de facto* leur rapprochement avec ledit substrat matriciel généralement chargé négativement.

Pour ce qui est d'éventuelles pulvérisations solide de ces cations, des mélanges organo-minéraux au sens de FR06/00014 sont préférables en raison de leurs non-bactéricidité à l'égard des BFCP bien adaptée à la vie dans les sols. Ces mélanges - souvent destinés à la granulation et à une application en bandes comme engrais « starter » - au sens de Claude et Giroux 2006, peuvent maintenant être formulés comme engrais pulvérulents et épandus sur les susdits résidus pailleux et/ou biomasses Cipan.

### APPLICATIONS BIOINDUSTRIELLES ET AGRONOMIQUES

Afin de simuler en serre les divers états de la macrostructure d'un cambisol - et donc la macroporosité qui va avec, j'ai fractionné par tamisage à sec un sol dit se13 (Tableau A) et obtenu deux sols reconstitués ; un dont la granulométrie comprends les particules et agrégats d'au plus 4 mm (i.e. SOL - fraction 4 mm), et l'autre constitué des particules et macro-agrégats d'au moins 4 mm (i.e. SOL - fraction 5 mm). En ce sens, le sol alsacien - dit se13 a été séché passivement, puis tamisé une première fois à 5 mm. Cette fraction a été par la suite re-tamisée à 4 mm. Ces reliquats sont donc d'au moins 4 à 5 mm, et appelés « fraction 5 mm », tandis que la fraction tamisée ainsi obtenue est constituée d'agrégats d'au plus 4 mm et appelée « fraction 4 mm » ; la caractérisation physico-chimique de ces fractions - 4 et 5 mm, est aussi rapportée au Tableau A.

**Tableau A : Caractérisation physico-chimique du sol dit SE13, et ses fractions (SOL) 4 et 5 mm**

| | | fraction "4 mm" | fraction "5 mm" |
|---|---|---|---|
| Argile | % | 21,1 | 21,1 |
| LF/LG | Na | 1,1 | 1,1 |
| Sables fins | % | 4,8 | 4,8 |
| pH | Na | 6.7 | 7,0 |
| Matière organique | g/kg-sol | 19,3 | 19,3 |
| CEC Metson | mÉq/kg-sol | 113 | 110 |
| P₂O₅ | mg/kg-sol | 200 | 260 |
| K₂O | mÉq/kg-sol | 2,0 | 2,2 |
| MgO | mÉq/kg-sol | 7,0 | 7,1 |
| CaO | mÉq/kg-sol | 118 | 124 |
| Saturation CEC (K, Ca, Mg) | % | 110 | 122 |

Ce fractionnement par tamisage a aussi permit de modifier légèrement le % de saturation cationique de la CEC de façon à ce que le degré de saturation de la fraction 4mm soient effectivement en dessous du seuil ∼ 112% proposé aux Figures 3/4, et celui de la fraction 5mm au dessus. La variable SOL intègre donc ici ces deux composantes pouvant agir sur le fonctionnement de la flore bactérienne résidusphérique ; macrostructure texturale et saturation cationique de la CEC.

Pour réaliser en serre la variable ION j,ai simplement apporté aux aux 3,5 g de résidus de culture pailleux par pot (voir infra) l'équivalent de 5 000 mL de FixaCa™ (i.e. 1 kg de CaO) pour quelques 10^{E}7 g (10 tonnes) de résidus pailleux (blé), soit l'équivalent de 0,00175 mL de FixaCa™ par pot, le FixaCa™ étant ici dilué au 5 x 10 000ième de façon à pouvoir être apporté aux 3,5 g de résidus pailleux via 3,5 mL de solution traitante. Ces essais sont réalisés avec du *Lolium multiflorum* dont les capacités de repousses accélérées sont très avantageuses pour ce type d'application. Afin de simuler en serre l'effet de l'azotobactérisation (AZB) des résidus de culture pailleux au sol selon le mode de réalisation préféré de l'invention, j'ai ici simplement pré-incubé à température ambiante l'équivalent des 1% poids/poids (p/p) de résidus pailleux pendant au moins une dizaine de jours avant de les incorporer par malaxage au sols reconstitués. Les témoins sans AZB comprennent donc des résidus pailleux ainsi pré-incubés mais par la suite étuvés à ∼65 degré Celsius pendant 90 min ; cela à pour effet d'atténuer dans son ensemble la flore (azoto)bactérienne de cette préparation, sans pour autant nuire conséquemment au fonctionnement de sa flore fongique cellulolytique beaucoup plus thermorésistante.

J'ai utilisé un dispositif expérimental en tiroir (« *split-plot* ») avec 4 répétitions, les traitements AZB étant imbriqués dans chacune des combinaisons SOL x ION. Dans les faits, ces 2 x 2 = 4 combinaisons sont disposées en carré-latin. Le dispositif comprend donc (2 x 2) x 2 = 8 modalités x 4 répétitions = 32 pots de 0,5 L contenant chacun 350 g de sol + 3,5 g de résidus de culture pailleux hachés et tamisés à 2 mm. L'avantage d'avoir niché AZB dans chacune des combinaisons SOL x ION est que l'efficacité relative (er) d'AZB peut maintenant être calculée, pour chacune des combinaisons SOL x ION. J'ai calculé ces erAZB en termes de production de phytomasses (matières sèches des parties aérienne - MSPA) et de la mobilisation végétale du N.

Une cinquantaine (50) de graines par pots de 0,5 L sont ainsi déposées à la surface du sol reconstitué, le nombre exact de plants levés étant fixé et/ou déterminé une fois les plantules établis. Les plantules sont irriguées et fertilisées avec un minimum de nitrate d'ammonium, soit l'équivalent de 35 mg/kg (environ 50 kg par hectare) de façon à éviter les carences nutritionnelles aberrantes. En ce sens, il est aussi recommandé d'apporter lors de la première irrigation post semis une dose habituelle d'une solution d'oligoéléments ; eg. Tableau B. L'irrigation des plants ce fait avantageusement en apportant uniformément une certaine quantité d'eau aux soucoupes sur lesquelles repose les pots.

| TABLEAU B : Préparation des solutions nutritives | |
|---|---|
| **Quatre solutions molaires (1M) pour les apports de N/P/K/S/Mg ;** | |
| 1. Ca(NO₃)₂.4H₂O | 236.1 g/l |
| 2. KNO₃ | 101.1 g/l |
| 3. KH₂PO₄ | 136.1 g/l |
| 4. MgSO₄.7H₂O | 246.5 g/l |
| **Deux solutions oligo-élémentaire, soit pour 1 L ;** | |
| H₃BO₃ | 2.8 g |
| MnCl₂.4H₂O | 1.8 g |
| ZnSO₄.7H₂O | 0.2 g |
| CuSO₄.5H₂O | 0.1 g, et, le cas échéant, |
| NaMoO₄ | 0.025 g |
| FeSO₄.7H₂O | 0,0078 g |
| **Pour prépare 1 L de solution nutritive, dite de « Hoagland » ;** | |
| 7 ml Ca(NO₃)₂ | |
| 5 ml KNO₃ | |
| 2 ml KH₂PO₄ | |
| 2 ml MgSO₄ | |
| 1 ml oligo-éléments (avec ou sans Mo) | |

Dès 54 jours post-semis (jps) une première coupe (c1) de la matière sèche des parties aériennes (MSPA) est effectuée ; approximativement 28 jours plus tard (82 jps) une seconde coupe (c2) est effectuée, la somme de ces deux coupes (c12) étant en principe la plus révélatrice d'un éventuel effet phytogène. La teneur en N-total de cette MSPA est par la suite déterminée permettant ainsi de calculer la mobilisation de l'azote (MOBN). Enfin, le nombre exacte de plantules par pot - soit entre 40 et 50, est établit ; les MSPA et MOBN par plantule peuvent donc être soumises à une analyse de variance (Anova) pour fin de comparaison multiple (Duncan, α = 5%) des moyennes ION, AZB, et/ou SOL. Il est aussi possible d'utiliser le nombre de plantules comme co-variable quantitative lors d'une analyses de covariance (Ancova) des données MSPA et MOBN par pot ; en principe les Anova et Ancova mènent aux mêmes inférences statistiques, bien qu'ici j'ai choisi de rapporter que les Anova des MPSA et MOBN par plantule.

En absence de neutralisation cationique de la CEC de la résidusphère et dans les sols relativement riches en argile et/ou avec une macrostructure suffisante capable d'assurer une continuité capillaire (Figure 1), les *Azotobacteraceae -* indigènes et/ou réintroduites par inoculation ainsi que les métabolites carbonés issus de la dégradation de la résidusphère s'éloigneront de celle-ci. Cela-dit, et étant donné la susdite continuité capillaire, et donc même sans adsorption et/ou proximité immédiate des *Azotobacteraceae,* la dégradation des résidus de culture pourra néanmoins continuer d'alimenter en carbone ces mêmes *Azotobacteraceae,* par diffusion et capillarité essentiellement. Dans le cas contraire de sols à la granulométrie plus grossière et/ou ne pouvant pas assurer une telle continuité capillaire (Figure 2) - des sols à fortes teneurs en sables par exemple, ou encore constitués de concrétions plutôt que d'agrégats, la diffusion distale de ces métabolites carbonés issus de la dégradation des résidus de culture sera plus réduite et les *Azotobacteraceae* voulant s'en alimenter auront intérêt à rester le plus près possible de cette source de substrats carbonés.

En situations saturées - comme c'est le cas au début de l'essai et pendant une période de 5 à 8 jours post semis, ces *Azotobacteraceae* auront donc nécessairement tendance à s'éloigner de ces résidus aux fortes CEC et migrer vers les complexes argilo-humiques aux CEC plus faibles. En effet, en absence d'un réseau capillaire continue assuré, une fois le sol redevenus plus sec, la diffusion de carbone soluble provenant de la dégradation des résidus de culture s'arrêtera et l'alimentation en carbone de ces *Azotobacteraceae* s'ayant trop éloignées cessera ; il est donc particulièrement important d'éviter cet éloignement des *Azotobacteraceae* en neutralisant la CEC de ces résidus de culture.

En sus de ce phénomène de migration des cellules bactériennes en fonction de l'hydromorphie, la granulométrie et la macro-structuration du sol, un autre phénomène peu jouer sur la disposition stratégique de ces cellules en proximité de la résidusphère. En effet, la disposition de cellules (azoto)bactériennes par rapport aux résidusphères à une certaine distance - d, de ceux celles-ci et en fonction du degré de neutralisation du CEC-CAH du sol environnant.

Un sol relativement pauvre en calcium, et dont la CEC est relativement non-saturé affichera beaucoup de charges négative capables de repousser lesdites bactéries vers les résidusphères (Figure 3 ; A). A mesure que la saturation cationique de la CEC du sol augmente, de moins en moins de charges négatives seront capables d'assurer cette répulsion desdites bactéries vers les résidusphères négativement chargés, d'où une certaine « hésitation » des BAC à une distance (d) intermédiaire (Figure 3 ; B). Au-delà d'un seuil proche mais inferieur à 100% de saturation de la CEC, les charges négatives non-neutralisées de la pédosphère seront plus faibles que celles de la résidusphère et lesdites bactéries auront aussi une tendance à émigrer de la résidusphère (Figure 3 ; C). Une fois la CEC sursaturé en cations, ceux-ci entrent en solution et peuvent diffuser vers la résidusphère et neutraliser les charges négatives de celle-ci ; la susdite émigration des BAC au dépends de la résidusphère sera ainsi atténuée, voire éventuellement stoppée (Figure 3 ; D).

Or, il est nécessaire d'apporter ici une modification à ce schéma afin de mieux tenir compte de l'immersion de CAH et argiles - et donc de leurs CEC, dans la solution du sol. Selon mes estimations, l'étendue de la marge de % de saturation cationique de la CEC à considérer ici est plutôt de 67 à 133%, le susdit seuil de saturation en principe proche mais inférieur à 100% étant vraisemblablement plutôt de le l'ordre de 110 à 115%, soit ∼ 112% (cf. Figure 4).

Dans les fait, les deux phénomènes - présentés aux Figures 1/2 et 3/4 respectivement, joueront ici ; la neutralisation cationique des CEC résidusphériques agissant sur l'un et l'autre de ces phénomènes. Outre l'action favorable d'ION sur l'erAZB, l'efficacité d'ION sur les rendements pondéreux (i.e. MSPA et/ou mobilisation élémentaire d'N) seront vraisemblablement plus importants sur la fraction 5 mm que sur la fraction 4mm (cf. Figures 1 et 2). Cependant, à la vue des concepts aux Figures 3 et 4, l'erAZB sera plus utile sur la fraction 4 mm dont le degré de saturation du CEC est légèrement plus faible que celle de la fraction 5 mm, soit vraisemblablement en dessous d'un certain seuil théorique (Figure C-bis). Ou encore, pour faire plus simple, disons que si les populations azotobactériennes des résidusphères sont augmentées par inoculation, l'efficacité relative de cette inoculation (erAZB) sera surtout dépendante du degré de saturation de la CEC du sol, et cela au sens entendu ici aux Figures 3 et 4 ; s'il n'y a pas d'inoculation, l'efficacité relative d'ION sera plus simplement que fonction de la macroporosité au sens des schémas aux Figure 1 et 2.

### Résultats analytiques : MSPA et mobilisation de l'azote à c1 (54 jps) et c2 (84 jps)

Tel que prévu - et en raison d'une macroporosité particulièrement favorable à l'alimentation des racines en nutriments, les MSPA et MOBN sont plus appréciables sur sol 5 mm que sur sol 4 mm, y compris et notamment avec ION et AZB (Figures 5 et 6). En effet, SOL-5 mm avec ION et AZB est absolument et pondéralement la modalité la plus efficace en termes de MSPA et de MOBN ; SOL-4 mm sans ION mais avec AZB étant en ce sens la modalité la moins efficace. De plus, indépendamment d'AZB (i.e. azotobactérisation par inoculation des résidusphères) ION est nettement plus efficace sur SOL-5 mm que sur SOL-4 mm (Figure 7 et 8). Cela dit, AZB profite de la réalisation d'ION (i.e. application de calcium aux résidusphères), et cela cette fois-ci indépendamment de la macroporosité induite via les traitements SOL-4 et 5 mm (Figure 9 et 10). Cette plus grande efficacité d'AZB qu'en présence d'ION et a priori indépendamment de la macroporosité laisser présager une mise en jeux de deux phénomènes tels que schématisés aux Figures 1, 2, 3 et 4. Cela dit, c'est bien avec SOL-4 mm et non SOL-5 mm que l'efficacité relative d'AZB (erAZB) est la plus appréciable ; sans ION, l'erAZB est même vraisemblablement diminuée (i.e. mois de 1,00 ; Figures 11 et 12).

Il y a donc vraisemblablement ici deux phénomènes influençant l'action des cations-Ca sur l'efficacité relative et absolue d'AZB ; (1) l'émigration initiale des *Azotobacteraceae indigènes* (i.e. déjà présents en proximité des résidusphères sans avoir été apportées par inoculation) - et leur isolement à une importante distance - *d* (Figures 1 et 2) de la résidusphère, en absence d'ION, d'où une certaine utilité de l'invention à neutraliser la CEC de la résidusphère, (2) l'adhésion plus prononcé des *Azotobacteraceae* apportées par inoculation aux résidusphères en réponse à ION - d'où l'efficacité relative plus élevée de ce type d'inoculation du fait d'un taux (%) de saturation plus centré dans l'étroite marge telle que décrite schématiquement aux Figures 3 et 4.

Pour faire simple, disons que sans inoculation d'Azotobacteraceae (AZB), la macroporosité affectera l'utilité d'ION ; avec inoculation, cette macroporosité sera moins importante, le % de saturation proche de 100% de la CEC étant elle plus conséquente. Plus précisément ;
- Sans inoculation azotobactérienne, ION est surtout utile en sols grossiers et/ou dont la macroporosité (macrostructure) provoque une discontinuité dans le réseau capillaire capable d'approvisionner en solutés carbonés les *Azotobacteraceae* distales
- Avec inoculation azotobactérienne, ION est surtout utile en sols dont le taux de saturation du CEC avoisine les 100%, favorisant ainsi une certaine émigration des *Azotobacteraceae* (trop) loin de la résidusphère contribuant ainsi à une dispersion de leurs populations.

Comme de raison, un sol moyen avec ces deux caractéristiques sera particulièrement avantageux pour la mise en oeuvre (évidence) de l'invention (ION).

La présente solution technique non-évidente ; comment une aussi petite quantité de moles de cations - une quinzaine (i.e. 1 000 g / 56 g par mole pour le CaO = 18 moles de CaO x 40/56 = ∼ 13 moles de Ca), et ne représentant même pas 1% des charges négative réciproques de la CEC des résidus de culture pailleux au sol, puisse néanmoins contribuer ainsi à l'efficacité relative des *Azotobacteraceae* inoculées ?! Étant donnée que les besoins métaboliques en calcium du sol de la plante et/ou des bactéries du sol ne sont généralement limitatifs, et que de toutes façon les quantités impliquées sont trop petites pour contribuer au bilan massique de la culture, ces cations calciques agissent vraisemblablement sur l'adhésion des *Azotobacteraceae* à la résidusphère au sens de la présente invention, ce qui en soi constitue une nouvelle forme de valorisation agronomique de ce type de sels cationiques et donc capable d'en améliorer l'efficacité pondérale.

### DÉFINITIONS ET ABRÉVIATIONS

**Capacité d'échange cationique** (CEC) : Nombre total de sites disponibles pour l'échange de cations, ou nombre total de cations échangeables, ou nombre de sites négatifs dans la matrice du sol ; en *milliéquivalent par 100 grammes* (mEq/100 g) ou *centimole de charge positive par kilogramme* (1 cmole(+)/kg = 1 meq/100g). La CEC est fortement reliée à la composition du sol et de la nature de son ***CAH*** (complexe argilo-humique).
**Eau capillaire (absorbable) :** portion de l'eau retenue par le sol au cours de l'infiltration des pluies occupant les pores fin et très fins (inférieurs à 10 um environ) : les forces capillaire et d'absorption sont suffisamment élevées pour s'opposer aux forces de gravité. A noter que l'eau capillaire est par définition absorbable par les racines, et cela contrairement à l'eau liée qui elle forme une fine pellicule à la surface des particules du sol. (de Duchafour 2001).
**Résidusphère :** Volume ou zone du sol entourant immédiatement les résidus de culture pailleux, engrais organo-minéraux et/ou biomasses racinaires résiduelles, et plus ou moins influencé par ceux-ci. Il est aussi question d'un « noyau » où se situe la décomposition desdits résidus de culture. A noter que les microorganismes responsables de la décomposition occupent généralement moins de 1% de l'ensemble du sol et sont particulièrement présents et actifs dans la résidusphère.
**Cambisol :** Profil peu évolué présentant un horizon d'altération Bw (cambique). Sur loess*, la détermination de cet horizon est subtile, c'est pourquoi on ne le distinguera généralement pas d'un sol "sans développement de profil", qui est également un profil peu évolué. On trouve ce type de sol sur des matériaux alluvionnaires et colluvionnaires.
**Gleysol :** Grand groupe de sols de l'ordre gleysolique. Ils sont formés d'un horizon Ah mince (moins de 8 cm, ou 3 po) recouvrant un matériau gleyifié, gris ou brunâtre, marbré; l'horizon Ah peut être absent. Le sol peut être recouvert en surface d'une couche de tourbes mixtes (densité apparente 0,1 ou plus) allant jusqu'à 40 cm (16 po), ou de tourbe de mousses fibrique (densité apparente inférieure à 0,1) de 60 cm (24 po).
**Podzol :** Ordre de sols ayant des horizons B podzoliques (Bh, Bhf ou Bf) dans lesquels sont accumulés, en associations amorphes, des matières organiques (principalement acides fulviques), de l'Al et généralement du Fe. Leurs solums sont acides et leurs horizons B possèdent une forte charge dépendant du pH. Les grands groupes de cet ordre sont: podzol humique, podzol ferro-humique et podzol humo-ferrique.
**Pulvérisation liquide :** Application d'une suspension ou d'une solution d'une matière active par aspersion d'une cible - ici avantageusement des résidus de culture pailleux au sol, avec un liquide (sous pression), d'un réservoir à travers une buse permettant la formation d'une brume localisée au niveau de ladite cible.
**Pulvérisation solide :** Application d'une matière active par dispersion d'un support solide en guise de co-formulant mais soit suffisamment pulvérulent et/ou composés de particules suffisamment petites pour assurer une répartition uniforme et dense à la surface de ladite cible.

### Références, bibliographie et brevets pertinents

Absolom, D.R., F.V. Lamberti, Z. Policova, W. Zingg, C.J. Van Oss et A.W. Neumann. Surface Thermodynamics of Bacterial Adhésion AEM, P. 90-97 Vol. 46, No. 1
Bachmann, J,, G. Guggenberger, Th. Baumgartl, R.H. Ellerbrock, E. Urbanek, M-O. Goebel, K. Kaiser, R. Horn et W.R. Fischer. 2008. Physical carbon-sequestration mechanisms under special consideration of soil wettability. J. Plant Nutr. Soil Sci., 171, 14-26
Berleman, J.E. and C.E. Bauer. 2005a. A Che -Like Signal Transduction Cascade Involved in Controlling Flagella Biosynthesis in Rhodospirillum Centenum. Mol. Microbiol. 55 : 1390-1402
Berleman, J.E. and C.E. Bauer. 2005b. Involvement of A Che-Like Signal Transduction Cascade In Regulating Cyst Cell Development In Rhodospirillum Centenum. Mol. Microbiol. 56 : 1457-1466
Boissezon, P. de. 1988. Effets de l'enfouissement de paille de luzerne sur la capacité d'échange d'un sol brun sur limon des plateaux (1). Cah. ORSTOM, sér. Pédol., vol. XXIV, no 4 : 337-339
Boissezon, P. de, G. Bellier, J-C. Brion, E. Gavinelli, J. Fardoux. 1991. Capacité d'échange cationique provenant de l'enfouissement de paille de luzerne dans le sol. Cah. Orstom, sér. Pédol., vol. XXVI no 3,1991 : 263-280
Busscher, Hendrik J., Mariette H. W. J. C. Uyen, Antoon W. J. Van Pelt, Anton H. Weerkamp, and Joop Arends. Kinetics Of Adhesion of the Oral Bacterium Streptococcus Sanguis Ch3 to Polymers With Different Surface Free Energies. AEM : P. 910-914 Vol. 51, No. 5
Busscher, H.J., A.H. Weerkamp, H.C. Van Der Mei, A.W. J. Van Pelt, H.P. De Jong et J. Arends. 1984. Measurement Of The Surface Free Energy Of Bacterial Cell Surfaces and Its Relevance For Adhesion. AEM 48: 980-983.
Chenu, C. et E. B. Roberson. 1996. Diffusion of Glucose in Microbial Extracellular Polysaccharide as Affected by Water Potential. Soil Biol. Biochem. Vol. 28, No. 7, Pp. 877-884, 1996
Claude, P-P. et L. Fillion. 2004. Effet de l'apport d'un inoculum bacterien aux residus de culture de maïs-grain au sol sur le rendement et la qualité de blés d'hiver panifiables en france. Agrosol (« Agrosolutions ») 15(1) :23-29.
Claude, P-P. et M. Giroux. 2006. Effet des engrais organo-minéraux inoculés sur la croissance des plants de maïs - grain, les rendements, les prélèvements des éléments nutritifs et la qualité des grains. Agrosolutions 17(1) : 51-64.
Duchafour, Ph. 2001. Introduction à la science du sol ; sol, végétation, environnement (6ième ed. Dunod).
Fletcher, M. 1988. Attachment of Pseudomonas Fluorescens to Glass and Influence Of Electrolytes on Bacterium-Substratum Separation Distance. Journal of Bacteriology 170 : 2027-2030.
Gaillard, V., C. Chenu et S. Recous. 2003. Carbon mineralisation in soil adjacent to plant residues .of contrasting biochemical quality. Soil Biology & Biochemistry 35 (2003) 93-99
Gannon, J.T., V.B. Manilal, T et M. Alexander. 1991. Relationship Between Cell Surface Properties and Transport Of Bacteria Through Soil. AEM : Jan. 1991, P. 190-193 Vol. 57, No.1
Gannon, J., Y. Tan, Ph. Baveye et M. Alexander. Effect of sodium chloride on transport of bacteria in a saturated aquifer material. AEM : 2497-2501 Vol. 57, No. 9
Grundmann, G.L., A. Dechesne, F. Bartoli, J. P. Flandrois, J. L. Chasse and R. Kizungu Spatial Modeling of Nitrifier Microhabitats in Soil. Soil Sci. Soc. Am. J. 65:1709-1716 (2001).
Jordan, F.L., R.M. Maier. 1999. Development of an agar lift-DNA/DNA hybridization technique for use in visualization of the spatial distribution of Eubacteria on soil surfaces. J. Microbiol Meth 38 : 107-117
Jang, L-K., P. W. Chang, J. E. Findley et T. F. Yen. Selection of Bacteria with Favorable Transport Properties Through Porous Rock for the Application of Microbial-Enhanced Oil Recovery. AEM 46 : 1066-1072.
Klein, D.A. M.W. Paschke. 2000. A soil microbial community structural-functional index : the microscopy-based total / active / active fungal/bacterial (TA/AFB) biovolume raion. Appl. Soil Ecol. 14 : 257-268
Korenevsky, Anton et Terry J. Beveridge. 2007. The Surface Physicochemistry and Adhesiveness Of Shewanella Are Affected By Their Surface Polysaccharides. Microbiology (2007), 153, 1872-1883
Kristiansen, S.M., P. Schjønning, I.K. Thomsen, J.E. Olesen, K. Kristensen et B.T. Christensen. 2006. Similarity of differently sized macro-aggregates in arable soils of different texture. Geoderma 137 (2006) 147-154
Lin, Q. et P.C. Brookes. 1999. Comparison of substrate induced respiration, selective inhibition and biovolume measurements of microbial biomass and its community structure in unamended, ryegrass-amended, fumigated and pesticide-treated soils. Soil Biol Biochem 31: 1999-2014
Miron, J. D. Ben-Ghedalia and M. Morrison. 2001. Invited Review: Adhesion Mechanisms of Rumen Cellulolytic Bacteria. J. Dairy Sci. 84:1294-1309
Ownley, B.H., Brion K. Duffy, and David M. Weller. 2003. Identification and Manipulation of Soil Properties To Improve the Biological Control Performance of Phenazine-Producing Pseudomonas fluorescens. AEM. 69 : 3333-3343
Recous, Sylvie, Celso Aita et Bruno Mary. 1999. In situ changes in gross N transformations in bare soil after addition of straw. Soil Biology and Biochemistry 31 (1999) 119-133
Remenant, B., G.L. Grundmann et L.Jocteur-Monrozier. 2009. From the micro-scale to the habitat: Assessment of soil bacterial community structure as shown by soil structure directed sampling. Soil Biol Biochem 41 : 29-36
Rijnaarts, Huub H. M., Willem Norde, Edward J. Bouwer,T Johannes Lyklema, and Alexander J. B. Zehnder. Bacterial Adhesion Under Static and Dynamic Conditions AEM, P. 3255-3265
Stenstrom, Th.A.. 1989. Bacterial Hydrophobicity, An Overall Parameter For The Measurement Of Adhesion Potential To Soil Particles. AEM, Jan. 1989, P. 142-147 Vol. 55, No. 1
Strong, D.T., H. De Wever, R. Merckx et S. Recous. 2004. Spatial location of carbon decomposition in the soil pore system. Eur J. Soil Sci., December 2004, 55, 739-750
Suni, S. et M Romantschuk. 2004. Mobilisation of bacteria in soils by electro-osmosis. FEMS Microbiol Ecol 49 : 51-57
Van Pelt, A. W. J., A. H. Weerkamp, M. H. W. J. C. Uyen, H.J. Busscher, H.P. De Jong, and J. Arend. 1985. Adhesion of Streptococcus Sanguis Ch3 To Polymers With Different Surface Free Energies. AEM 49 : 1270-75.
Van Loosdrecht, M.C.M, J. Lyklema, W. Norde, G. Schraa et A.J.B. Zehnder. 1987. Electrophoretic Mobility and Hydrophobicity as a Measure to Predict the Initial Steps of Bacterial Adhesion. AEM. 53 : 1898-1901
Van Schie, P.M. et M. Fletcher. 1999. Adhesion of biodegradative anaerobic bacteria to solid surfaces. AEM 65 : 5082-88
White, D.C., C.A. Flemming, K.T. Leung et S.J. Macnaughton. 1998. In situ microbial ecology for quantitative appraisal, monitoring, and risk assessment of pollution remediation in soils, the subsurface, the rhizosphere and in biofilms. J. Microbiol. Meth. 32 (1998) 93-105
Williams, V. et M. Fletcher. 1996. Pseudomonas Fluorescens Adhesion and Transport Through Porous Media Are Affected By Lipopolysaccharide Composition. AEM, 62 : 100-104
Young, I.M. et K. Ritz. 2000. Tillage, habitat space and function of soil microbes. Soil & Tillage Research 53 201±213

## Revendications

1. Application par pulvérisation liquide de solutions nutritives contenant des cations divalents mais dépourvues d'oses, d'osides et de sels de macroéléments N et P, mais pouvant contenir des sels de K et/ou de Na, directement aux résidus de culture pailleux de cultures céréalières ou de maïs et incorporés par la suite en surface de sols arables en pré-semis de grandes cultures d'hivers ou de cultures intermédiaires pièges à nitrates (Cipan) non-Fabaceae, cette application étant **caractérisée en ce que** les cations sont apportés en équivalents par hectare de résidus de culture pailleux au sol compris entre 5 et 50 moles, plus particulièrement entre 10 et 30 moles, et avantageusement d'environ 12 à 15 moles.

2. Application par pulvérisation liquide de solutions nutritives contenant des cations divalents selon une quelconque des revendications précédentes **caractérisée en ce que** les résidus de culture au sol sont azotobactérisés.

3. Application par pulvérisation liquide de solutions nutritives contenant des cations divalents selon une quelconque des revendications précédentes **caractérisée en ce que** les résidus de culture au sol sont azotobactérisés à l'aide d'une dose-hectare d'inocula de cellules *Azotobacteraceae* comprenant entre 0,1 et 100 x 10¹², plus particulièrement entre 1 et 10 x 10¹², et avantageusement aux alentours de 5 x 10¹² cellules viables.

4. Application par pulvérisation liquide de solutions nutritives contenant des cations divalents selon une quelconque des revendications précédentes **caractérisée en ce que** le sol est un cambisol ou assimilable à un cambisol.

5. Application par pulvérisation liquide de solutions nutritives contenant des cations divalents selon la revendication précédente **caractérisée en ce que** le degré de saturation cationique de la CEC du sol, y compris la portion de celle-ci attribuable au complexe argilo-humique (CAH), est important, soit compris entre des valeurs de 67 à 133%, plus particulièrement entre es valeurs de 75 et 125%, et avantageusement entre des valeurs de 88 et 112%.

6. Application par pulvérisation liquide de solutions nutritives contenant des cations divalents selon une quelconque des revendications précédentes **caractérisée en ce que** les résidus de culture pailleux laissés au sol par des cultures céréalière ou de maïs-grain sont préalablement enduits d'un minimum de d'oses ou d'osides capable de déclencher l'activité métabolique des *Azotobacteraceae* présentes et/ou des bactéries du sol environnantes.

## Patentansprüche

1. Anwendung durch Flüssigzerstäubung von Nährlösungen, enthaltend zweiwertige Kationen, jedoch ohne Ose, Oside und Salze von Makroelementen N und P, jedoch mit der Möglichkeit, K- und/oder Na-Salze zu enthalten, direkt auf die Rückstände eines strohhaltigen Anbaus von Getreide- oder Maiskulturen und in der Folge integriert in die Oberfläche von Ackerböden, in Voraussaat von großen Winterkulturen oder Zwischenkulturen zur Nitratspeicherung (Cipan), nicht der Familie der Fabaceae, wobei diese Anwendung **dadurch gekennzeichnet ist, dass** die Kationen in Äquivalenten pro Hektar Rückstände des strohhaltigen Anbaus in den Boden zwischen 5 und 50 Mol, insbesondere zwischen 10 und 30 Mol und vorteilhafterweise ungefähr 12 bis 15 Mol eingebracht werden.

2. Anwendung durch Flüssigzerstäubung von Nährlösungen, enthaltend zweiwertige Kationen nach einem der vorhergehenden Ansprüche, **dadurch gekennzeichnet, dass** die Anbaurückstände im Boden Azobakterien aufweisen.

3. Anwendung durch Flüssigzerstäubung von Nährlösungen, enthaltend zweiwertige Kationen nach einem der vorhergehenden Ansprüche, **dadurch gekennzeichnet, dass** die Anbaurückstände im Boden Azobakterien aufweisen, mit Hilfe einer Dosis pro Hektar Inokula von *Azotobacteraceae*-Zellen, umfassend zwischen 0,1 und 100 x 10¹², insbesondere zwischen 1 und 10 x 10¹², und vorteilhafterweise um 5 x 10¹² lebensfähige Zellen.

4. Anwendung durch Flüssigzerstäubung von Nährlösungen, enthaltend zweiwertige Kationen nach einem der vorhergehenden Ansprüche, **dadurch gekennzeichnet, dass** der Boden ein Cambisol oder ein Gleichwertiges eines Cambisols ist.

5. Anwendung durch Flüssigzerstäubung von Nährlösungen, enthaltend zweiwertige Kationen nach dem vorhergehenden Anspruch, **dadurch gekennzeichnet, dass** der kationische Sättigungsgrad der KAK des Bodens, darin eingeschlossen der Teil desselben, der dem Ton-Humus-Komplex (CAH) zuzuordnen ist, bedeutend ist, d. h. zwischen Werten von 67 bis 133 %, insbesondere zwischen Werten von 75 und 125 % und vorteilhafterweise zwischen Werten von 88 und 112 % liegt.

6. Anwendung durch Flüssigzerstäubung von Nährlösungen, enthaltend zweiwertige Kationen nach einem der vorhergehenden Ansprüche, **dadurch gekennzeichnet, dass** die Rückstände von strohhaltigem Anbau, die durch Getreide- oder Körnermaiskulturen im Boden gelassen werden, im Voraus mit einem Minimum von Osen und Osiden angereichert werden, die dazu in der Lage sind, die metabolische Aktivität der anwesenden *Azotobacteraceae* und/oder der Bakterien des umgebenden Bodens auszulösen.

## Claims

1. Liquid sprayed application of nutrient solutions containing divalent cations but not containing any monosaccharides, osides and salts of N and P macroelements, but that can contain salts of K and/or Na, directly to residues of cereal or maize straw crops and subsequently incorporated into the surface of arable soils before sowing extensive winter crops or intermediate non-*Fabaceae* nitrate-trapping crops (Cipan), this application being **characterised in that** the cations are added in equivalents per hectare of straw crop residues on the ground between 5 and 50 moles, more particularly between 10 and 30 moles and advantageously between 12 and 15 moles.

2. Liquid sprayed application of nutrient solutions containing divalent cations according to any one of the previous claims **characterised in that** the crop residues on the ground are azotobacterised.

3. Liquid sprayed application of nutrient solutions containing divalent cations according to any one of the previous claims **characterised in that** the crop residues on the ground are azotobacterised by means of a dose-hectare of inocula of *Azotobacteraceae* cells containing between 0.1 and 100 x 10¹², more particularly between 1 and 10 x 10¹², and advantageously about 5 x 10¹² viable calls.

4. Liquid sprayed application of nutrient solutions containing divalent cations according to any one of the previous claims **characterised in that** the soil is a cambisol or can be treated like a cambisol.

5. Liquid sprayed application of nutrient solutions containing divalent cations according to the previous claim **characterised in that** the degree of cationic saturation of the CEC of the soil, including the portion that can be attributed to the clay-humus complex CHC, is high and specifically between the values of 67 and 133%, more particularly between the values of 75 and 125%, and advantageously between the values of 88 and 112%.

6. Liquid sprayed application of nutrient solutions containing divalent cations according to any one of the previous claims **characterised in that** the residues of a straw crop left in the ground after cereal or maize-grain crops are firstly coated with a minimum of monosaccharides or osides capable of triggering the metabolic action of *Azotobacteraceae* present and/or surrounding bacteria in the soil.
